(19) **Europäisches Patentamt / European Patent Office / Office européen des brevets**

(11) **EP 1 557 354 B1**

(12) **FASCICULE DE BREVET EUROPEEN**

(45) Date de publication et mention
de la délivrance du brevet:
**15.08.2007 Bulletin 2007/33**

(51) Int Cl.:
***B64C 27/467*** *(2006.01)*

(21) Numéro de dépôt: **05000892.9**

(22) Date de dépôt: **18.01.2005**

(54) **Pale de voilure tournante à double flèche et effilement limités**

Rotorblatt mit doppelter Pfeilung und begrenzter Verjüngung

Double swept rotor blade with limited taper

(84) Etats contractants désignés:
**DE GB IT**

(30) Priorité: **21.01.2004 FR 0400529**

(43) Date de publication de la demande:
**27.07.2005 Bulletin 2005/30**

(73) Titulaires:
* **EUROCOPTER**
**13725 Marignane Cédex (FR)**
* **Office National d'Etudes et**
**de Recherches Aérospatiales**
**(O.N.E.R.A.)**
**92320 Châtillon-sous-Bagneux (FR)**

(72) Inventeurs:
* **Falchero, Danièle**
**13122 Ventabren (FR)**
* **Arnaud, Gilles**
**13009 Marseille (FR)**
* **Beroul, Frédéric**
**13100 Aix en Provence (FR)**

* **Bailly, Joelle**
**92140 Clamart (FR)**
* **Baumier, Philippe**
**92290 Chatenay-Malabry (FR)**
* **Delrieux, Yves**
**92350 Le Plessis Robinson (FR)**

(74) Mandataire: **Renaud-Goud, Thierry**
**GPI & Associes**
**EuroParc de Pichaury**
**1330, rue Guillibert de la Lauzière, Bât D1**
**13856 Aix-en-Provence Cédex 3 (FR)**

(56) Documents cités:
**US-A- 6 116 857**

* **PATENT ABSTRACTS OF JAPAN vol. 2003, no. 02, 5 février 2003 (2003-02-05) & JP 2002 308192 A (TECH RES & DEV INST OF JAPAN DEF AGENCY; FUJI HEAVY IND LTD), 23 octobre 2002 (2002-10-23)**

**EP 1 557 354 B1**

## Description

La présente invention concerne une pale de voilure tournante à double flèche et effilement limités. La voilure tournante est l'organe qui permet la sustentation et le déplacement d'un aéronef tel qu'un hélicoptère.

Une telle voilure doit naturellement présenter des performances aérodynamiques propres à assurer la motricité de l'hélicoptère qu'elle équipe. Elle doit de plus satisfaire aux exigences toujours plus contraignantes des normes de certification acoustique. Il s'ensuit que la géométrie d'une pale se définit maintenant en prenant en compte ces deux aspects qui peuvent parfois se révéler antagonistes.

Les considérations dimensionnelles qui président aux performances aérodynamiques d'une pale sont notamment exposées dans le document FR 2 689 852.

En ce qui concerne les effets acoustiques de la géométrie d'une pale, les connaissances sont beaucoup moins avancées.

On connaît toutefois une pale multi zones, cf US 6 116 857, qui comporte, en partant de l'axe de la voilure tournante :

- une zone interne présentant un effilement inverse, c'est-à-dire dont la corde va croissante,

- une zone en flèche avant dont la corde est tout d'abord croissante puis décroissante, et

- une zone en flèche arrière dont la corde va décroissante.

Selon l'usage, on rappelle que dans une zone en flèche avant, le bord d'attaque forme, par rapport à l'axe de la pale, un angle positif, c'est-à-dire dans le sens de rotation du rotor, tandis que dans une zone en flèche arrière ce bord d'attaque forme un angle négatif.

Cette pale multi zones présente des avantages pour réduire les nuisances sonores. En effet, la succession des deux zones en flèche avant et en flèche arrière évite que le bord d'attaque de la pale ne soit parallèle à l'axe des tourbillons émis par les pales précédentes, tout le long de son envergure. En outre, l'effilement de la zone en flèche arrière influe favorablement sur le bruit car :

- pour un profil donné, l'épaisseur est d'autant plus faible que la corde est courte, ce qui diminue le bruit dit « d'épaisseur »,

- la surface de la pale étant réduite suite à l'effilement, la portance l'est aussi, ce qui diminue le bruit dit « de charge »

Toutefois, cette pale présente des limitations sur le plan dynamique car elle ne présente pas un placement satisfaisant des centres dits « remarquables », à savoir le foyer aérodynamique, le centre de gravité, le centre élastique par rapport à l'axe de pas. Il en résulte des efforts de commande excessifs et une mauvaise adaptation dynamique globale du rotor.

De plus, ses performances aérodynamiques sont moins bonnes que celles d'une pale conventionnelle de surface identique. En particulier, sa figure de mérite en vol stationnaire est plus faible et la pale avançante décroche prématurément à forte masse en vol d'avancement.

L'effilement inverse de la zone interne est intéressant en ce sens qu'il permet de diminuer la masse de la pale. Il faut cependant que le pied de pale, autrement dit le début de la zone interne, soit capable de supporter les moments de torsion qui y sont générés, ceci plus particulièrement du fait de la zone en flèche arrière. Il convient donc de rigidifier la pale en augmentant son épaisseur en s'approchant de l'axe de la voilure tournante. Le profil de la pale est donc très complexe puisque son profil doit non seulement s'effiler mais de plus s'épaissir en s'approchant de l'axe de la voilure tournante.

Il n'est pas nécessaire de rappeler à l'homme du métier les difficultés qu'entraînent une telle complexité.

Il s'avère par ailleurs que l'effilement de la zone interne pénalise sérieusement le comportement en vol stationnaire, ce qui influe directement sur la masse qu'il est possible de faire décoller.

La présente invention a ainsi pour objet une pale peu bruyante qui présente un comportement dynamique sain et des performances aérodynamiques améliorées.

Selon l'invention, une pale de voilure tournante comporte successivement selon un rayon de référence, correspondant au rayon du disque rotor c'est-à-dire au rayon de la voilure tournante, une zone interne, une zone en flèche avant et une zone en flèche arrière et une zone externe; de plus, le début de la zone en flèche avant est compris entre 0,47 et 0,65 fois le rayon de référence.

Le bord d'attaque de la zone externe est parabolique et présente un angle compris entre -40° et -60° par rapport à l'axe de ladite pale, au droit dudit rayon de référence.

De préférence, le début de la zone en flèche arrière est compris entre 0,75 et 0,90 fois le rayon de référence.

De plus, la zone en flèche avant présente un angle de flèche compris entre 5° et 10°.

De même, la zone en flèche arrière présente un angle de flèche compris entre -15° et -30°.

Avantageusement, la zone en flèche arrière présente une corde constante qui est égale à la corde de la section la plus externe de ladite zone en flèche avant.

Ainsi, les contraintes pesant sur la fabrication de la pale sont allégées.

Selon un mode de réalisation privilégié, l'effilement de la zone en flèche arrière est compris entre 1 et 2, c'est-à-dire que le rapport de la section de la plus interne de cette zone et de la corde la plus externe de cette même zone est compris entre 1 et 2.

Par ailleurs, la pale comportant de plus une zone externe faisant suite à la zone en flèche arrière, cette zone externe présente également un effilement.

L'effilement et l'affinement de la zone externe présente le double avantage d'améliorer les performances aérodynamiques en stationnaire et à grande vitesse ainsi que de réduire le bruit en survol.

Par exemple, le début de la zone externe est compris entre 0,92 et 0,97 fois le rayon de référence.

De préférence, cet effilement est parabolique et le bord d'attaque présente un angle compris entre - 40° et - 60° par rapport à l'axe de la pale, au droit du rayon de référence. A cet endroit, l'épaisseur est comprise entre 6% et 8% de la corde.

Cette angulation du bord d'attaque, au droit du rayon de référence, est particulièrement importante puisqu'elle permet de réduire le nombre de Mach incident, c'est-à-dire le quotient de la vitesse du profil relativement à l'air, perpendiculairement au bord d'attaque, par la vitesse du son.

Or, le comportement aérodynamique d'une pale est directement lié au nombre de Mach incident sur la pale.

Ainsi, la réduction du nombre de Mach incident en bout de pale permet à cette dernière de toujours fonctionner dans le domaine subsonique, en évitant de ce fait les chocs de compressibilité propres au domaine transsonique.

De plus, en termes d'acoustique, une réduction du nombre de Mach incident a pour conséquence une diminution du bruit.

En outre, la pale comporte un tronçon vrillé présentant une loi de vrillage.

Avantageusement, le début du tronçon vrillé coïncide avec le début de la zone interne.

Ainsi, la loi de vrillage est linéaire de préférence jusqu'à au moins 0,9 fois le rayon de référence et elle présente un coefficient qui est compris entre -10° et -13° divisé par le rayon de référence.

Suivant une caractéristique additionnelle, la pale comporte à son extrémité, dans la zone externe, un pan incliné formant dièdre.

De plus, l'inclinaison δ de ce pan est comprise entre 10° et 20° au droit du rayon de référence.

En outre, le début de la zone interne profilée est compris entre 0,15 et 0,30 fois le rayon de référence.

De préférence, le rayon de référence est compris entre 5,0 et 10,0 mètres.

Par ailleurs, la pale comprend au moins une section présentant un profil d'épaisseur comprise entre 6% et 8%, cette section étant incluse dans la zone externe.

De même, la pale comprend au moins un tronçon présentant un profil d'épaisseur comprise entre 8% et 10%, ce tronçon étant situé au-delà de 75% du rayon de référence. De façon remarquable, ce tronçon comprend au moins une section d'épaisseur égale à 9%.

Avantageusement, la zone interne présente une corde constante.

Cette corde est comprise entre L et L fois 1,1 où L vaut :

$$L = \frac{\int_{R0}^{R} L(r)r^2 dr}{\int_{R0}^{R} r^2 dr}$$

L(r) étant la loi d'évolution de la corde le long de l'envergure, R0 le début de la partie profilée et R le rayon de référence.

De même, la zone en flèche avant présente une corde constante qui est égale à la corde de la zone interne.

La présente invention apparaîtra maintenant avec plus de détails dans le cadre de la description qui suit d'un exemple de réalisation donné à titre illustratif en se référant aux figures annexées qui représentent :

- la figure 1, une vue de dessus d'une pale, et

- la figure 2, une vue de face de cette même pale.

Les éléments présents dans les deux figures sont affectés d'une seule et même référence.

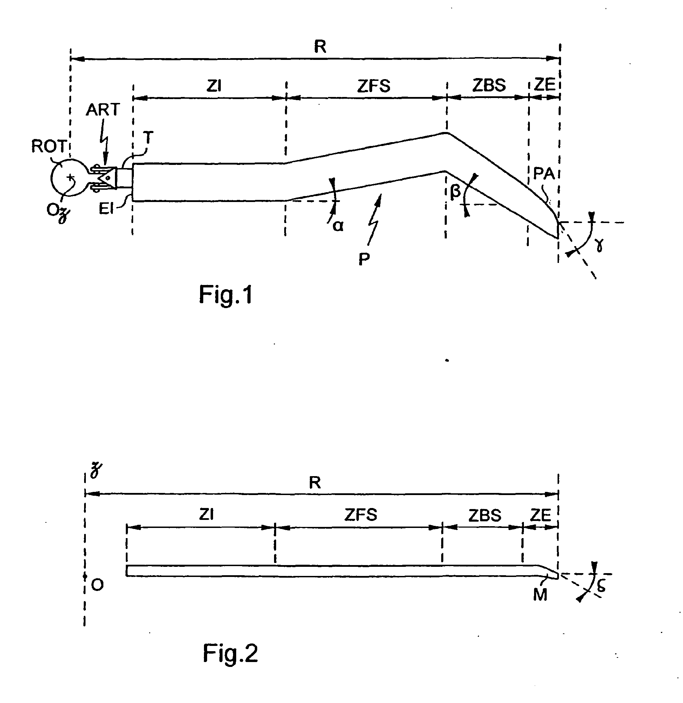

En se reportant à la figure 1, une pale P est fixée par un élément de liaison T aux articulations de traînée et de battement schématisées ART reliées à un arbre d'entraînement ROT, en rotation par rapport à un axe Oz sensiblement vertical.

L'extrémité libre EE de la pale, ou extrémité externe, figure à une distance de l'axe Oz qu'il est convenu d'appeler rayon de référence R.

La pale P comprend successivement :

- une zone interne ZI qui commence à une extrémité interne EI solidaire de l'élément de liaison T,

- une zone en flèche avant ZFS,

- une zone en flèche arrière ZBS, et

- une zone externe.

De préférence, l'extrémité interne EI correspondant au début de la partie profilée de la pale est à une distance de l'axe rotor comprise entre 15% et 30% du rayon de référence, idéalement, 27%.

La limite de séparation entre la zone interne ZI et la zone de flèche avant ZFS est avantageusement comprise entre 47% et 65% du rayon de référence, idéalement 60%.

La limite de séparation entre la zone en flèche avant ZFS et la zone en flèche arrière ZBS est comprise entre 75% et 90% du rayon de référence, idéalement 85%.

La limite de séparation entre la zone en flèche arrière ZFS et la zone externe ZE est comprise entre 0,92 et 0,97 fois le rayon de référence.

La zone interne ZI présente une corde constante comprise entre 1 et 1,1 fois L, idéalement 1,07 fois, où L vaut :

$$L = \frac{\int_{R0}^{R} L(r)r^2 dr}{\int_{R0}^{R} r^2 dr}$$

L(r) étant la loi d'évolution de la corde le long de l'envergure, R0 le début de la partie profilée et R le rayon de référence.

De préférence, la zone en flèche avant ZFS présente elle aussi une corde constante dont la valeur est par conséquent égale à celle de la zone interne ZI. L'angle de flèche $\alpha$ est compris entre 5° et 10° et vaut préférentiellement 7°.

De préférence, la zone en flèche arrière ZBS présente une corde dont le rapport d'effilement entre les deux extrémités est compris entre 1 et 2, idéalement 1,5. Le rapport d'effilement s'entend comme le rapport de la corde de la section la plus interne, celle qui jouxte la zone en flèche avant, et de la corde de la section la plus externe, celle qui jouxte la zone externe. L'angle de flèche ß est compris entre -15° et -30° et vaut préférentiellement -25°.

La zone externe ZE présente un bord d'attaque qui décrit une parabole, de sorte qu'il présente un angle $\gamma$ compris entre - 40° et - 60°, idéalement - 45°, au droit du rayon de référence, c'est-à-dire à l'extrémité externe de la pale.

Finalement, la pale se termine par un pan M qui forme un dièdre comme indiqué sur la figure 2. Ce pan M est incliné vers le bas et présente une inclinaison $\delta$ qui peut varier de 10° à 20°, idéalement 16°.

Par ailleurs, un tronçon de la pale est vrillé. Ce tronçon peut s'étendre de la zone interne à la zone externe. De préférence, la loi de vrillage est linéaire et elle présente un coefficient compris entre -10°/R et -13°/R, R représentant toujours le rayon de référence. Idéalement, ce coefficient vaut -12°/R.

## Revendications

1. Pale (P) de voilure tournante comportant successivement selon un rayon de référence (R), une zone interne (ZI), une zone en flèche avant (ZFS), une zone en flèche arrière (ZBS), et une zone externe, le début de ladite zone en flèche avant (ZFS) étant compris entre 0,47 et 0,65 fois ledit rayon de référence (R) et le bord d'attaque de ladite zone externe de ladite pale étant parabolique, **caractérisée en ce que** ledit bord d'attaque de ladite zone externe présente un angle ($\gamma$) compris entre -40° et -60° par rapport à l'axe de ladite pale, au droit dudit rayon de référence (R).

2. Pale (P) selon la revendication 1, **caractérisée en ce que** le début de ladite zone en flèche arrière (ZBS)est compris entre 0,75 et 0,90 fois ledit rayon de référence (R).

3. Pale (P) selon l'une quelconque des revendications précédentes, **caractérisée en ce que** ladite zone en flèche avant (ZFS) présente un angle de flèche compris entre 5° et 10°.

4. Pale (P) selon l'une quelconque des revendications précédentes, **caractérisée en ce que** ladite zone en flèche arrière (ZBS) présente un angle de flèche compris entre -15° et -30°.

5. Pale (P) selon l'une quelconque des revendications précédentes, **caractérisée en ce que** ladite zone en flèche arrière (ZBS) présente une corde constante qui est égale à la corde de la section la plus externe de ladite zone en flèche avant (ZFS).

6. Pale (P) selon l'une quelconque des revendication 1 à 4, **caractérisée en ce que** l'effilement de ladite zone en flèche arrière (ZBS) est compris entre 1 et 2.

7. Pale (P) selon l'une quelconque des revendications précédentes **caractérisée en ce que**, comportant de plus une zone externe (ZE) faisant suite à ladite zone en flèche arrière (ZBS), cette zone externe présente un effilement.

8. Pale (P) selon la revendication 7, **caractérisée en ce que** le début de ladite zone externe (ZE) est compris entre 0,92 et 0,97 fois ledit rayon de référence (R).

9. Pale (P) selon l'une quelconque des revendications 7 ou 8,

**caractérisée en ce que** ledit effilement est parabolique.

10. Pale (P) selon l'une quelconque des revendications précédentes,
**caractérisée en ce qu**'elle comporte un tronçon vrillé présentant une loi de vrillage.

11. Pale (P) selon la revendication 10,
**caractérisée en ce que** le début dudit tronçon vrillé coïncide avec le début de ladite zone interne (ZI).

12. Pale (P) selon l'une quelconque des revendications 10 ou 11,
**caractérisée en ce que** ladite loi de vrillage est linéaire.

13. Pale (P) selon la revendication 12,
**caractérisée en ce que** ladite loi de vrillage présente un coefficient qui est compris entre -10° et -13° divisé par ledit rayon de référence (R).

14. Pale (P) selon l'une quelconque des revendications précédentes,
**caractérisée en ce qu**'elle comporte à son extrémité externe un pan incliné (M) formant dièdre.

15. Pale (P) selon la revendication 14,
**caractérisée en ce que** l'inclinaison (δ) de ce pan (M) est comprise entre 10° et 20° au droit dudit rayon de référence.

16. Pale (P) selon l'une quelconque des revendications précédentes,
**caractérisée en ce que** le début de ladite zone interne (ZI) est compris entre 0,15 et 0,30 fois ledit rayon de référence (R).

17. Pale (P) selon l'une quelconque des revendications précédentes,
**caractérisée en ce que** ledit rayon de référence est compris entre 5,0 et 10,0 mètres.

18. Pale (P) selon l'une quelconque des revendications précédentes,
**caractérisée en ce qu**'elle comprend au moins une section présentant un profil d'épaisseur comprise entre 6% et 8%, cette section étant incluse dans ladite zone externe (ZE).

19. Pale (P) selon l'une quelconque des revendications précédentes,
**caractérisée en ce qu**'elle comprend au moins un tronçon présentant un profil d'épaisseur comprise entre 8% et 10%, ce tronçon étant situé au delà de 75% dudit rayon de référence (R).

20. Pale (P) selon la revendication 19,
**caractérisée en ce que** ledit tronçon comprend au moins une section d'épaisseur égale à 9%.

21. Pale (P) selon l'une quelconque des revendications précédentes,
**caractérisée en ce que** ladite zone interne (ZI) présente une corde constante.

22. Pale (P) selon la revendication 21,
**caractérisée en ce que** la corde de ladite zone interne (ZI) est comprise entre L et L fois 1,1 où L vaut :

$$L = \frac{\int_{R0}^{R} L(r)r^2 dr}{\int_{R0}^{R} r^2 dr}$$

L(r) étant la loi d'évolution de la corde le long de l'envergure, R0 le début de la partie profilée et R ledit rayon de référence.

23. Pale (P) selon l'une quelconque des revendications précédentes,
**caractérisée en ce que** ladite zone en flèche avant (ZFS) présente une corde constante.

24. Pale (P) selon la revendication 23,
**caractérisée en ce que** la corde de ladite zone en flèche avant (ZFS) est égale à la corde de ladite zone interne (ZI).

**Claims**

1. A blade (P) for a rotary wing, comprising in succession, over a reference radius (R), an inner zone (ZI), a forward-swept zone (ZFS), a back-swept zone (ZBS) and an outer zone (ZE), the start of the said forward-swept zone (ZFS) being between 0.47 and 0.65 of the way along the said reference radius (R), and the leading edge of the said outer zone of the said blade being parabolic, **characterised in that** the said leading edge of the said outer zone is at an angle (γ) of between -40° and -60° in relation to the axis of the said blade in a line with the said reference radius (R).

2. A blade (P) according to Claim 1, **characterised in that** the start of the said back-swept zone (ZBS) is between 0.75 and 0.90 of the way along the said reference radius (R).

3. A blade (P) according to either of the preceding claims, **characterised in that** the said forward-swept zone (ZFS) has a sweep angle of between 5° and 10°.

4. A blade (P) according to any one of the preceding claims, **characterised in that** the said back-swept zone (ZBS) has a sweep angle of between -15° and -30°.

5. A blade (P) according to any one of the preceding claims, **characterised in that** the said back-swept zone (ZBS) has a chord that is constant and is the same as the chord of the outermost section of the said forward-swept zone (ZFS).

6. A blade (P) according to any one of Claims 1 to 4, **characterised in that** the taper ratio of the said back-swept zone (ZBS) is between 1 and 2.

7. A blade (P) according to any one of the preceding claims, **characterised in that** it further includes an outer zone (ZE) which succeeds the said back-swept zone (ZBS), this outer zone having a taper ratio.

8. A blade (P) according to Claim 7, **characterised in that** the start of the said outer zone (ZE) is between 0.92 and 0.97 of the way along the said reference ratio (R).

9. A blade (P) according to either of Claims 7 and 8, **characterised in that** the said taper ratio is parabolic.

10. A blade (P) according to any one of the preceding claims, **characterised in that** it includes a twisted portion satisfying a rule of twist.

11. A blade (P) according to Claim 10, **characterised in that** the start of the said twisted portion coincides with the start of the said inner zone (ZI).

12. A blade (P) according to either of Claims 10 or 11, **characterised in that** the said rule of twist is linear.

13. A blade (P) according to Claim 12, **characterised in that** the said rule of twist has a coefficient of between -10° and -13°, divided by the said reference radius (R).

14. A blade (P) according to any one of the preceding claims, **characterised in that** it includes at its outer end a sloping face (M) which forms a dihedral.

15. A blade (P) according to Claim 14, **characterised in that** the angle of slope ($\delta$) of this face (M) is between 10° and 20° in relation to the line formed by the said reference radius.

16. A blade (P) according to any one of the preceding claims, **characterised in that** the start of the said inner zone (ZI) is between 0.15 and 0.30 of the way along the said reference radius (R).

17. A blade (P) according to any one of the preceding claims, **characterised in that** the said reference radius is between 5.0 and 10.0 metres.

18. A blade (P) according to any one of the preceding claims, **characterised in that** it comprises at least one section having a thickness profile of between 6% and 8%, this section being included in the said outer zone (ZE).

19. A blade (P) according to any one of the preceding claims, **characterised in that** it comprises at least one portion having a thickness profile of between 8% and 10%, this portion being located more than 75% of the way along the said reference radius (R).

20. A blade (P) according to Claim 19, **characterised in that** the said portion comprises at least one thickness section equal to 9%.

21. A blade (P) according to any one of the preceding claims, **characterised in that** the said inner zone (ZI) has a chord that is constant.

22. A blade (P) according to Claim 21, **characterised in that** the chord of the said inner zone (ZI) is between L and L times 1.1, where L is:

$$L = \frac{\int_{R0}^{R} L(r) r^2 \, dr}{\int_{R0}^{R} r^2 \, dr}.$$

where L(r) defines how the chord varies along the span, R0 is the start of the profiled part and R is the said reference radius.

23. A blade (P) according to any one of the preceding claims, **characterised in that** the said forward-swept zone (ZFS) has a chord that is constant.

24. A blade (P) according to Claim 23, **characterised in that** the chord of the said forward-swept zone (ZFS) is the same as the chord of the said inner zone (ZI).

**Patentansprüche**

1. Rotorblatt (P), das nacheinander entlang einem Bezugsradius (R) einen inneren Bereich (ZI), einen nach vorne gepfeilten Bereich (ZFS), einen nach hinten gepfeilten Bereich (ZBS) und einen äußeren Bereich aufweist, wobei der Beginn des nach vorne gepfeilten Bereichs (ZFS) zwischen dem 0,47- und 0,65-Fachen des Bezugsradius (R) liegt und wobei die Vorderkante des äußeren Bereichs des Blatts parabolisch ist, **dadurch gekennzeichnet, dass** die Vorderkante des äußeren Bereichs einen Winkel (γ) zwischen -40° und -60° in Bezug auf die Achse des Blatts senkrecht zum Bezugsradius (R) aufweist.

2. Blatt (P) nach Anspruch 1, **dadurch gekennzeichnet, dass** der Beginn des nach hinten gepfeilten Bereichs (ZBS) zwischen dem 0,75- und dem 0,90-Fachen des Bezugsradius (R) liegt.

3. Blatt (P) nach einem der vorhergehenden Ansprüche, **dadurch gekennzeichnet, dass** der nach vorne gepfeilte Bereich (ZFS) einen Pfeilungswinkel zwischen 5° und 10° aufweist.

4. Blatt (P) nach einem der vorhergehenden Ansprüche, **dadurch gekennzeichnet, dass** der nach hinten gepfeilte Bereich (ZBS) einen Pfeilungswinkel zwischen -15° und -30° aufweist.

5. Blatt (P) nach einem der vorhergehenden Ansprüche, **dadurch gekennzeichnet, dass** der nach hinten gepfeilte Bereich (ZBS) eine konstante Sehne aufweist, die der Sehne des äußersten Abschnitts des nach vorne gepfeilten Bereichs (ZFS) entspricht.

6. Blatt (P) nach einem der Ansprüche 1 bis 4, **dadurch gekennzeichnet, dass** die Verjüngung des nach hinten gepfeilten Bereichs (ZBS) zwischen 1 und 2 beträgt.

7. Blatt (P) nach einem der vorhergehenden Ansprüche, **dadurch gekennzeichnet, dass** es außerdem einen äußeren Bereich (ZE) aufweist, der auf den nach hinten gepfeilten Bereich (ZBS) folgt und eine Verjüngung aufweist.

8. Blatt (P) nach Anspruch 7, **dadurch gekennzeichnet, dass** der Beginn des äußeren Bereichs (ZE) zwischen dem 0,92- und dem 0,97-Fachen des Bezugsradius (R) liegt.

9. Blatt (P) nach einem der Ansprüche 7 oder 8, **dadurch gekennzeichnet, dass** die Verjüngung parabolisch ist.

10. Blatt (P) nach einem der vorhergehenden Ansprüche, **dadurch gekennzeichnet, dass** es einen geschränkten Abschnitt mit einem Schränkungsgesetz aufweist.

11. Blatt (P) nach Anspruch 10, **dadurch gekennzeichnet, dass** der Beginn des geschränkten Abschnitts mit dem Beginn des inneren Bereichs (ZI) zusammenfällt.

12. Blatt (P) nach einem der Ansprüche 10 oder 11, **dadurch gekennzeichnet, dass** das Schränkungsgesetz linear ist.

13. Blatt (P) nach Anspruch 12, **dadurch gekennzeichnet, dass** das Schränkungsgesetz einen Koeffizienten aufweist, der zwischen - 10° und -13° geteilt durch den Bezugsradius (R) beträgt.

14. Blatt (P) nach einem der vorhergehenden Ansprüche, **dadurch gekennzeichnet, dass** es an seinem äußeren Ende eine geneigte Fläche (M) aufweist, die einen Dieder bildet.

15. Blatt (P) nach Anspruch 14, **dadurch gekennzeichnet, dass** die Neigung (δ) der Fläche (M) zwischen 10° und 20° senkrecht zum Bezugsradius entspricht.

16. Blatt (P) nach einem der vorhergehenden Ansprüche, **dadurch gekennzeichnet, dass** der Beginn des inneren Bereichs (ZI) zwischen dem 0,15- und dem 0,30-Fachen des Bezugsradius (R) liegt.

17. Blatt (P) nach einem der vorhergehenden Ansprüche, **dadurch gekennzeichnet, dass** der Bezugsradius zwischen 5,0 und 10,0 Meter beträgt.

18. Blatt (P) nach einem der vorhergehenden Ansprüche, **dadurch gekennzeichnet, dass** es mindestens einen Abschnitt mit einem Dickenprofil zwischen 6 % und 8 % besitzt, wobei dieser Abschnitt im äußeren Bereich (ZE) eingeschlossen ist.

19. Blatt (P) nach einem der vorhergehenden Ansprüche, **dadurch gekennzeichnet, dass** es mindestens einen Abschnitt mit einem Dickenprofil zwischen 8 % und 10 % aufweist, wobei der Abschnitt jenseits von 75 % des Bezugsradius (R) gelegen ist.

20. Blatt (P) nach Anspruch 19, **dadurch gekennzeichnet, dass** der Abschnitt mindestens einen Teil mit einer Dicke gleich 9 % aufweist.

21. Blatt (P) nach einem der vorhergehenden Ansprüche, **dadurch gekennzeichnet, dass** der innere Bereich (ZI) eine konstante Sehne aufweist.

22. Blatt (P) nach Anspruch 21, **dadurch gekennzeichnet, dass** die Sehne des inneren Bereichs (ZI) zwischen L und L Mal 1,1 beträgt, mit

$$L = \frac{\int_{R0}^{R} L(r)r^2 dr}{\int_{R0}^{R} r^2 dr},$$

wobei L(r) das Gesetz der Entwicklung der Sehne entlang der Spannweite, R0 der Beginn des Profilabschnitts und R der Bezugsradius sind.

**23.** Blatt (P) nach einem der vorhergehenden Ansprüche, **dadurch gekennzeichnet, dass** der nach vorne gepfeilte Bereich (ZFS) eine konstante Sehne aufweist.

**24.** Blatt (P) nach Anspruch 23, **dadurch gekennzeichnet, dass** die Sehne des nach vorne gepfeilten Bereichs (ZFS) der Sehne des inneren Bereichs (ZI) entspricht.

Fig.1

Fig.2

9

**EP 1 557 354 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2689852

- US 6116857 A